# EUROPEAN PATENT APPLICATION

(11) **EP 4 487 971 A2**
(43) Date of publication of application: **08.01.2025**
(21) Application number: 24181436.7
(22) Date of filing: 11.06.2024
(51) Int. Cl.: B08B 13/00, B64G 6/00, G05B 13/02

(54) **CLEANING MEASUREMENT AND CONTROL SYSTEM**

(30) Priority: 13.06.2023 US 202318333598
(71) Applicant: Hamilton Sundstrand Corporation, Charlotte, NC 28217-4578 (US)
(72) Inventor: AL-NADAWI, Yasir, Vernon, CT, 06066 (US); SURANA, Amit, Newington,, 06111 (US); ILAK, Milos, Hoboken, NJ, 07030 (US); CHEVVA, Konda Reddy, Ellington, CT, 06029 (US)
(74) Representative: Dehns

(57) **Abstract**

A controller (CSC) operable to perform cleaning system (120) control operations includes generating, using a processor system, a first electronic cleanliness measurement (ECM) associated with a cleaning target (150). Based at least in part on a determination that the first ECM exceeds a threshold, the processor system is used to generate a first cleaning system protocol. The processor system executes the first cleaning system protocol to control a cleaning system operable to clean debris from the cleaning target.

## Description

### BACKGROUND

The invention pertains to the art of cleaning systems and, in particular, to computer systems operable to control a cleaning system to e.g. automatically, efficiently and effectively clean a cleaning target such as various types of spacesuits, an example of which is an extravehicular mobility unit (EMU).

The EMU is an independent anthropomorphic system that provides environmental protection, mobility, life support and communication for astronauts or crewmembers to perform extravehicular activity (EVA) in earth orbit. EMUs are elaborate "suits" worn by astronauts and include, for example, a helmet and full body suit supplied by an oxygen tank, all of which maintain an environment that sustains the astronaut.

The lunar surface is covered by a layer of unconsolidated debris called lunar regolith (dust). Lunar regolith is abrasive like sandpaper, jagged like volcanic ash, and clings like fire soot. Thus, it is important for astronauts to not be exposed to such regolith when removing or exiting an EMU. Cleaning systems have been developed for cleaning lunar regolith from EMUs before the astronaut removes or exits the EMU.

### BRIEF DESCRIPTION

Herein provided is a controller operable to perform cleaning system control operations that include generating, using a processor system, a first electronic cleanliness measurement (ECM) associated with a cleaning target. Based at least in part on a determination that the first ECM exceeds a threshold, the processor system is used to generate a first cleaning system protocol. The processor system executes the first cleaning system protocol to control a cleaning system operable to clean debris from the cleaning target.

In embodiments, the control operations further include, subsequent to using the first cleaning system protocol to control a cleaning system operable to clean debris from the cleaning target, generating a second ECM associated with the cleaning target.

In embodiments, the control operations further include, based at least in part on a determination that the second ECM exceeds a threshold, generating an updated version of the first cleaning system protocol.

In embodiments, the control operations further include using the updated version of the first cleaning system protocol to control the cleaning system operable to clean debris from the cleaning target.

In embodiments, the control operations further include, based at least in part on a determination that the first ECM does not exceed the threshold, not initiating operation of the cleaning system.

In embodiments, the control operations further include, based at least in part on a determination that the second ECM does not exceed the threshold, terminating operation of the cleaning system.

In embodiments, the processor system uses a first configuration a machine learning algorithms to generate the first ECM and the second ECM. The processor system also uses a second configuration of machine learning algorithms to generate the first cleaning system protocol and the updated version of the first cleaning system protocol. The second configuration of machine learning algorithms includes a reinforcement learning machine learning algorithm.

Also provided is a controller operable to perform control operations that include accessing, using a processor system, raw data associated with a cleaning target. The processor system applies a segmentation operation to the raw data to generate segmented data. The processor system further applies a classification operation to the segmented data to generate classified segmented data. The classified segmented data is provided to a cleaning system controller operable to use the classified segmented data generate a cleaning system protocol operable to control a cleaning system to clean debris from the cleaning target.

In embodiments, the raw data includes raw image data.

In embodiments, the raw image data represents the cleaning target and debris to be cleaned from the cleaning target.

In embodiments, the control operations further include applying, using the processor system, the segmentation operation and a filtering operation to the raw date to generate the segmented data as filtered segmented data.

In embodiments, the control operations further include applying, using the processor system, the classification operation to the filtered segmented raw data to generate the classified segmented data as classified filtered segmented data.

In embodiments, the processor system uses a first convolutional neural network (CNN) to perform the segmentation operation; and a second CNN to perform the filtering operation.

Also provided is a controller operable to perform cleaning system control operations that include generating, using a processor system, a first electronic cleanliness measurement (ECM) associated with an extravehicular mobility unit (EMU) having debris. Based at least in part on a determination that the first ECM exceeds a threshold, the processor system is used to generate a first cleaning system protocol. The processor system executes the first cleaning system protocol to control a cleaning system operable to clean some or all of the debris from the EMU.

In embodiments, the control operations further include, subsequent to using the first cleaning system protocol to control a cleaning system operable to clean some or all of the debris from the EMU, generating a second ECM associated with the EMU.

In embodiments, the control operations further include, based at least in part on a determination that the second ECM exceeds a threshold, generating an updated version of the first cleaning system protocol.

In embodiments, the control operations further include using the updated version of the first cleaning system protocol to control the cleaning system operable to clean some or all of the debris from the EMU.

In embodiments, the control operations further include, based at least in part on a determination that the first ECM does not exceed the threshold, not initiating operation of the cleaning system.

In embodiments, the control operations further include, based at least in part on a determination that the second ECM does not exceed the threshold, terminating operation of the cleaning system.

In embodiments, the processor system uses a first configuration a machine learning algorithms to generate the first ECM and the second ECM. The processor system uses a second configuration of machine learning algorithms to generate the first cleaning system protocol and the updated version of the first cleaning system protocol. The second configuration of machine learning algorithms includes a reinforcement learning machine learning algorithm.

### BRIEF DESCRIPTION OF THE DRAWINGS

The following descriptions should not be considered limiting in any way. With reference to the accompanying drawings, like elements are numbered alike:
FIG. 1 is a simplified block diagram illustrating a system in accordance with embodiments of the disclosure;
FIG. 2 is a simplified flow diagram illustrating a computer-implemented methodology in accordance with embodiments of the disclosure;
FIG. 3 is a diagram illustrating an exemplary EMU-type cleaning target that can be cleaned utilizing embodiments of the disclosure;
FIG. 4A is a diagram illustrating a configuration of a cleaning chamber operable to utilize embodiments of the disclosure;
FIG. 4B is a diagram illustrating another configuration of a cleaning chamber operable to utilize embodiments of the disclosure;
FIG. 4C is a diagram illustrating another configuration of a cleaning chamber operable to utilize embodiments of the disclosure;
FIG. 4D is a diagram illustrating another configuration of a cleaning chamber operable to utilize embodiments of the disclosure;
FIG. 5 is a simplified block diagram illustrating a non-limiting example of how a cleanliness measurement module can be implemented in accordance with embodiments of the disclosure;
FIG. 6A depicts a non-limiting example of image segmentation and filtration results in accordance with embodiments of the disclosure;
FIG. 6B depicts a non-limiting example of cell classifications generated using a segment classification algorithm in accordance with embodiments of the disclosure;
FIG. 6C depicts another non-limiting example of cell classifications generated using a segment classification algorithm in accordance with embodiments of the disclosure;
FIG. 7 depicts a non-limiting example of additional cell classifications generated using a segment classification algorithm in accordance with embodiments of the disclosure;
FIG. 8 is a diagram illustrating a non-limiting example of how a preprocessing stage can be implemented in accordance with embodiments of the disclosure;
FIG. 9 is a diagram illustrating a non-limiting example of how a segment classification algorithm can be implemented in accordance with embodiments of the disclosure;
FIG. 10 is a diagram illustrating a non-limiting example of a reinforcement learning (RL) system that can be used to implement a cleanliness system controller in accordance with embodiments of the disclosure;
FIG. 11 is a diagram illustrating another non-limiting example of a RL system that can be used to implement a cleanliness system controller in accordance with embodiments of the disclosure; and
FIG. 12 is a simplified block diagram illustrating a computing system operable to implement embodiments of the disclosure.

### DETAILED DESCRIPTION

A detailed description of one or more embodiments of the disclosed apparatus, method and/or computer program product are presented herein by way of exemplification and not limitation with reference to the Figures.

Exemplary embodiments of the disclosure provide computer systems, computer-implemented methods, and computer program products operable to control a cleaning system to automatically, efficiently, and effectively clean debris from a cleaning target. In some embodiments of the disclosure, the cleaning target is one of a variety of different types of spacesuits. In some embodiments of the disclosure, the aforementioned spacesuit type is an EMU, and the debris is lunar regolith. The EMU is worn or occupied by an astronaut or other user while performing a task outside the spacecraft. Such tasks include, for example, an EVA, which includes, for example, lunar surface exploration. While performing an extravehicular task such as an EVA, the EMU (occupied by the astronaut) can be exposed to unconsolidated debris called lunar regolith (dust). Lunar regolith is abrasive like sandpaper, jagged like volcanic ash, and clings like fire soot. It is therefore necessary to remove lunar regolith from EMUs before the astronaut removes or exits the EMU. The cleaning system that is controlled using embodiments of the disclosure can be implemented in a cleaning environment such as a cleaning chamber. The cleaning system includes various cleaning solution application components (e.g., a network of movable nozzles) operable to spray a cleaning solution on a cleaning target (e.g., the EMU) inside the cleaning environment.

In a conventional operation of the cleaning system, and where the cleaning target is a to-be-cleaned EMU, an astronaut wearing the to-be-cleaned EMU enters the cleaning environment, and the cleaning solution application components are activated to spray the EMU with a cleaning solution operable to remove debris from the EMU. This process continues until an operator determines through visual inspection that the EMU is clean. The reliance on visual inspections to determine cleanliness, and the general lack of variation in when, where, how, and the duration for which the cleaning solution is applied, results in the conventional operation of cleaning systems being inefficient, inconsistent, and often ineffective. In other words, conventional operation of cleaning systems can result in and EMU being judged clean and returned to service when it still has an unacceptable level of debris.

Embodiments of the disclosure provide efficient, consistent and effective control of a cleaning system by using a cleaning measurement & control (CMC) system to control the operations of a cleaning system in a cleaning environment. In embodiments of the disclosure, the CMC system includes a cleanliness measurement module (CMM) and a cleaning system controller (CSC). Embodiments of the disclosure modify the cleaning environment to include a sensor network operable to sense various parameters of the cleaning target, the debris, and/or the debris on the cleaning target. In some embodiments of the disclosure, the sensor network includes a camera operable to capture images depicting various parameters of the cleaning target, the debris, and/or the debris on the cleaning target. In some embodiments of the disclosure, the sensor network further includes debris sensors operable to sense various parameters of the debris and/or the debris on the cleaning target. The sensor network, periodically and in real time, sends the various sensed cleaning target parameters and/or debris parameters to the CMM, which is operable to analyze the sensed cleaning target parameters and/or debris parameters to generate and/or update various forms of electronic cleanliness measurements associated with the cleaning target and/or the debris. For example, the generated/updated electronic cleanliness measurements can include an assessment of the level of debris on the cleaning target; the location of the debris on the cleaning target; the nature of the cleaning target's material, contour, shape, etc.; the debris type; and any other classifications of the debris and/or the cleaning target that provide details about the relationship between the debris, the cleaning target, and the level (or amount) of debris on the cleaning target.

The CMM, periodically and in real time, sends the generated/updated electronic cleanliness measurements to the CSC, which is operable to use to the generated/updated electronic cleanliness measurement to generate/update electronic cleaning instructions that will be applied to the various cleaning solution application components (e.g., a network of nozzles) of the cleaning system as an initial or updated cleaning system protocol. In accordance with aspects of the disclosure, the CSC is configured and arranged to generate/update the electronic cleaning instructions (i.e., the cleaning system protocol) in a manner that is operable to control the cleaning system to automatically, efficiently, consistently, and effectively clean debris from the cleaning target. For example, where the generated/updated electronic cleanliness measurements indicate that the boots and legs of the EMU have high levels of debris, the CSC generates/updates electronic cleaning instructions that control the cleaning solution application components of the cleaning system (e.g., flow rate, volume, direction, etc.) to direct more cleaning solution spray to the boot and legs of the EMU. Similarly, where the generated/updated electronic cleanliness measurements indicate that the helmet body and the backpack have light levels of debris, the CSC generates/updates electronic cleaning instructions that control the cleaning solution application components of the cleaning system (e.g., flow rate, volume, direction, etc.) to direct less cleaning solution spray to the helmet body and backpack of the EMU. Where the generated/updated electronic cleanliness measurements indicate that a region of the EMU has reached a targeted level of cleanliness, the CSC generates/updates electronic cleaning instructions that control the cleaning solution application components of the cleaning system to discontinue delivering the cleaning solution to the clean region. In embodiments of the disclosure where the generated/updated electronic cleanliness measurements indicate a type of the debris, the CSC generates/updates electronic cleaning instructions that control the cleaning solution application components of the cleaning system to select and deliver a type of cleaning solution that is effective for the detected type of debris.

In some embodiments of the disclosure, the CMM can be implemented using classification machine learning algorithms operable to extract features from the outputs of the sensor network and evaluate the extracted features to classify various aspects of the cleaning target, the debris, and/or the debris on the cleaning target to generate the electronic cleanliness measurements. In some embodiments of the disclosure, outputs from the sensor network include images of the cleaning target, the debris, and/or the debris on the cleaning target; and the CMM can be implemented as a segmentation & filtration module coupled to a segment classification algorithm. The segmentation & filtration module can be implemented as a convolutional neural network (CNN) operable to perform image segmentation. In general, CNNs are a type of deep learning algorithm that developed specifically to work with images and other grid-like data, such as audio signals and time series data. Image segmentation involves dividing a visual input into segments to make image analysis easier. Segments are made up of sets of one or more pixels. Image segmentation sorts pixels into larger components while also eliminating the need to consider each pixel as a unit. It is the process of dividing image into manageable sections or "tiles." The process of image segmentation starts with defining small regions on an image that should not be divided. These regions are called seeds, and the position of these seeds defines the tiles. In some embodiments of the disclosure, the segmentation & filtration module can be implemented as a CNN in the form of a convolutional encoder-decoder network operable to segment the input images into "N" cells (where N is a whole number) and pass the segments to the segment classification algorithm. In embodiments of the disclosure, the segment classification algorithm generates the previously-describe electronic cleanliness measurements for each segment. In embodiments of the disclosure, the segment classification algorithm can be implemented as a CNN architecture for image classification having convolutional layers, max-pooling layers, and fully connected layers.

In some embodiments of the disclosure, the CSC can be implemented using machine learning algorithms operable to extract features from the outputs of the CMM to generate/update the electronic cleaning instructions (i.e., the cleaning system protocol) in a manner that is operable to control the cleaning system to automatically, efficiently, consistently, and effectively clean debris from the cleaning target. In some embodiments of the disclosure, the CSC can be implemented using a reinforcement learning (RL) neural network operable to learn the electronic cleaning instructions that are best suited to efficiently, consistently, and effectively clean debris from the cleaning target. RL is a type of machine learning technique that enables an agent to learn in an interactive environment by trial and error using feedback from its own actions and experiences. Though both supervised and RL use mapping between input and output, unlike supervised learning where the feedback provided to the agent is the correct set of actions for performing a task, RL uses rewards and punishments as signals for positive and negative behavior. As compared to unsupervised learning, RL is different in terms of goals. While the goal in unsupervised learning is to find similarities and differences between data points, in the case of RL the goal is to find a suitable action model that would maximize the total cumulative reward of the agent.

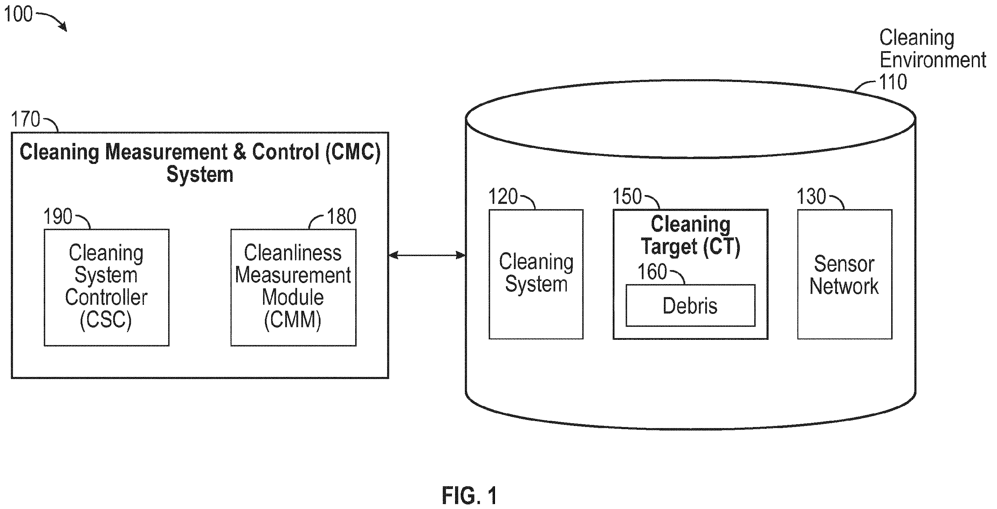

Turning now to a more detailed description of aspects of the disclosure, FIG. 1 depicts a simplified block diagram illustrating a system 100 in accordance with embodiments of the disclosure. The system 100 includes a cleaning measurement & control (CMC) system 170 electronically coupled to a cleaning environment 110. The CMC system 170 includes a cleanliness measurement module (CMM) 180 and a cleaning system controller (CSC) 190. The cleaning environment includes a cleaning system 120 and a sensor network 130. A cleaning target 150 having debris 160 that needs to be cleaned from the cleaning target 150 can be placed within the cleaning environment 110 for cleaning by the cleaning system under control of the CMC system 170. The debris 160 can be lunar regolith or any other type of dust as long as it can be detected and localized. The cleaning target 150 can be removed from the cleaning environment 110 when cleaning activities are completed.

Although the CMC system 170, the cleaning system 120, and the sensor network 130 are depicted as separate components, it is understood that the depicted components can be integrated with one another in any suitable combination. For example, the CMC system 170 can be incorporated within the cleaning system 120, and the sensor network 130 can be incorporated within the CMC system 170.

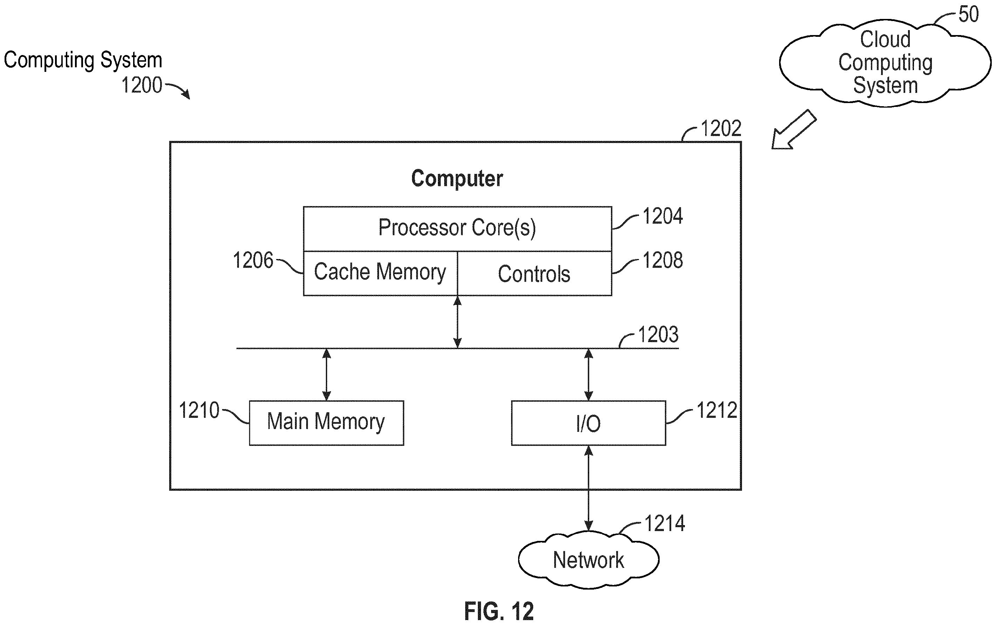

A cloud computing system 50 (shown in FIG. 12) can be in wired or wireless electronic communication with the system 100. The cloud computing system 50 can supplement, support or replace some or all of the functionality of the various components of the system 100. Additionally, some or all of the functionality of the system 100 can be implemented as a node of the cloud computing system 50.

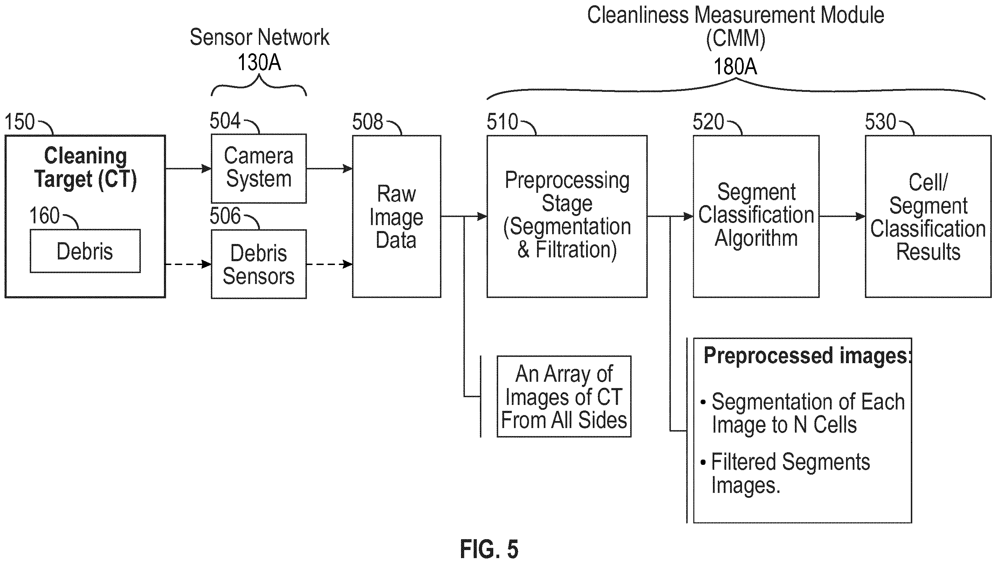

The system 100, in accordance with embodiments of the disclosure, provides efficient, consistent and effective control of the cleaning system 120 by using the CMC system 170 to control the operations of a cleaning system 120 in the cleaning environment 110. In some embodiments of the disclosure, the sensor network 130 includes a camera system 504 (shown in FIG. 5) operable to capture images depicting various parameters of the cleaning target 150 and/or the debris 160. In some embodiments of the disclosure, the sensor network 130 further includes debris sensors 506 (shown in FIG. 5) operable to sense various parameters of the cleaning target 150 and the debris 160. The sensor network 130, periodically and in real time, sends the various sensed cleaning target parameters and/or debris parameters to the CMM 180, which is operable to analyze the sensed cleaning target parameters and/or debris parameters to generate and/or update various forms of electronic cleanliness measurements associated with the cleaning target 150 and/or the debris 160. For example, the generated/updated electronic cleanliness measurements can include an assessment of the level of the debris 160 on the cleaning target 150; the location of the debris 160 on the cleaning target 150; the nature of the material, contour, shape, etc. of the cleaning target 150; where the debris 160 is located; the type of the debris 160; and any other classifications of the debris 160 and/or the cleaning target 150 that provide details about the debris 160, the cleaning target 150, and the relationship between the debris 160 and the cleaning target 150.

The CMM 180, periodically and in real time, sends the generated/updated electronic cleanliness measurements to the CSC 190, which is operable to use to the generated/updated electronic cleanliness measurement to generate/update electronic cleaning instructions (i.e., a cleaning system protocol) that will be applied to the various cleaning solution application components (e.g., a network of nozzles) of the cleaning system 120. In accordance with aspects of the disclosure, the CSC 190 is configured and arranged to generate/update the electronic cleaning instructions in a manner that is operable to control the cleaning system 120 to automatically, efficiently, consistently, and effectively clean the debris 160 from the cleaning target 150.

In some embodiments of the disclosure, the CMM 180 can be implemented using classification machine learning algorithms operable to extract features from the outputs of the sensor network 130 and evaluate the extracted features to classify various aspects of the cleaning target 150 and/or the debris 160 to generate the electronic cleanliness measurements. In some embodiments of the disclosure, outputs from the sensor network 130 include images of the cleaning target 150 and/or the debris 160; and the CMM 180 can be implemented as a segmentation & filtration module 510 (shown in FIG. 5) coupled to a segment classification algorithm 520 (shown in FIG. 5). Additional details of the segmentation & filtration module 510 and segment classification algorithm 520 are described herein in connection with the description of FIGS. 5-9.

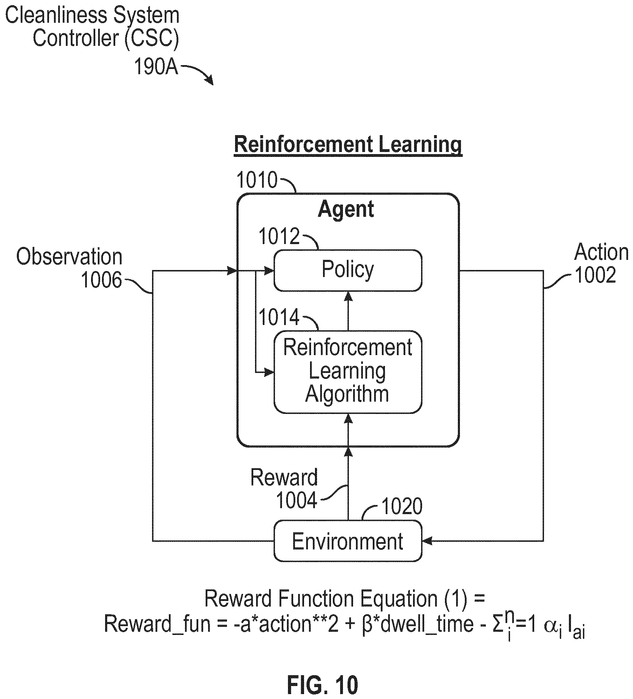

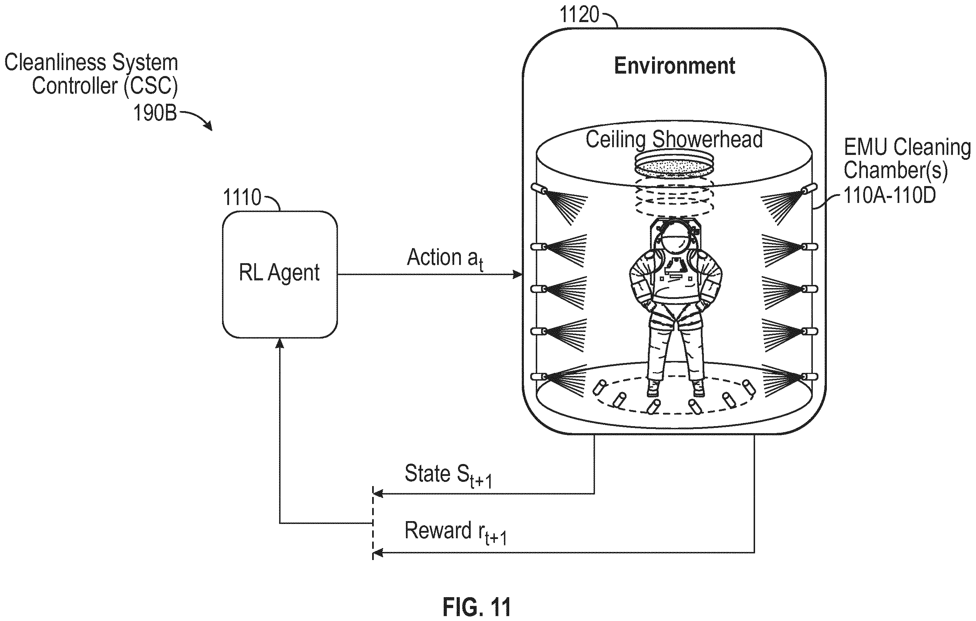

In some embodiments of the disclosure, the CSC 190 can be implemented using machine learning algorithms operable to extract features from the outputs of the CMM 180 to generate/update the electronic cleaning instructions in a manner that is operable to control the cleaning system to automatically, efficiently, consistently, and effectively clean debris 160 from the cleaning target 150. In some embodiments of the disclosure, the CSC 190 can be implemented using a RL neural network operable to learn the electronic cleaning instructions (i.e., the cleaning protocol) that are best suited to efficiently, consistently, and effectively clean the debris 160 from the cleaning target 150. Additional details of an RL system that can be utilized in embodiments of the disclosure are provided subsequently herein in connections with the descriptions of FIGS. 10 and 11.

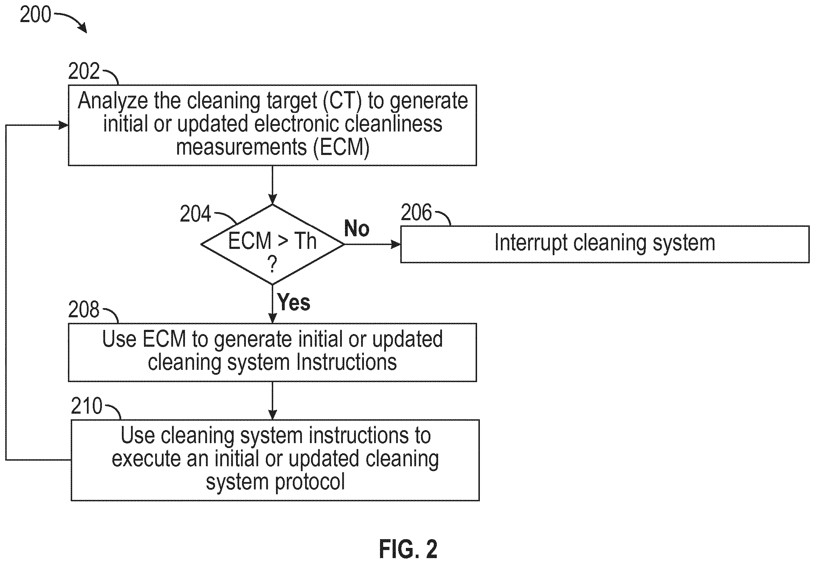

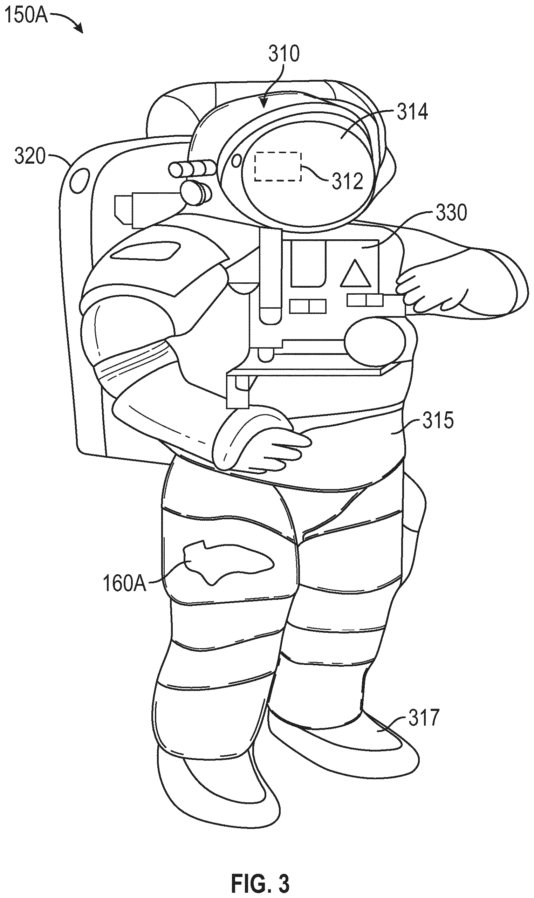

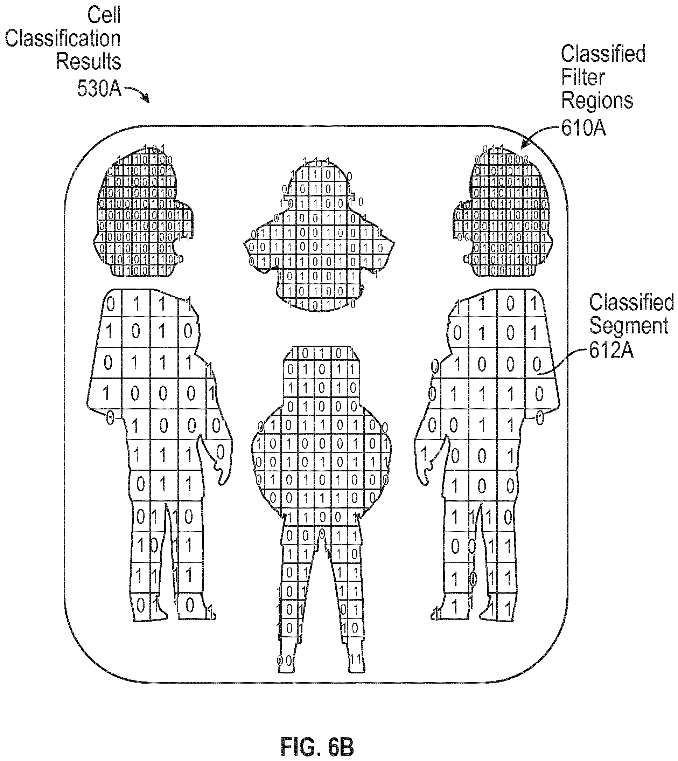

FIG. 2 depicts a flow diagram illustrating a computer-implemented or computer-controlled methodology 200 operable to be performed by the system 100 (shown in FIG. 1) in accordance with embodiments of the disclosure. The following description of the methodology 200 will refer to both the operations of the methodology 200 and the corresponding component of the system 100 that performs the operations. The methodology 200 begins at block 202 where the CMM 180 uses outputs from the sensor network 130 to analyze the cleaning target 150 and the debris 160 to generate initial or updated electronic cleanliness measurements (ECM). In some embodiments of the disclosure, ECMs are computed for the various segments of the cleaning target 150 (e.g., a cleaning target 150 implemented as the EMU 150A shown in FIG. 3 and FIG. 6B).

At decision block 204, the methodology 200 determines whether or not the ECM (or each of the segment-based ECMs) exceeds a cleanliness threshold (Th), where the cleanliness threshold represents a level of debris presence that the debris 160 must be reduced below in order for the methodology 200 to conclude that the cleaning target 150 is clean. If the answer to the inquiry at decision block 204 is no, the methodology 200 uses the CMC system 170 to determine that the debris 160 is below the cleanliness threshold (Th) and moves to block 206 and interrupts or ends the operations of the cleaning system 120. If the answer to the inquiry at decision block 204 is yes, the methodology 200 uses the CMC system 170 to determine that the debris 160 is above the cleanliness threshold (Th) and moves to block 208 where the CSC 190 uses the ECM to generate initial or updated instructions for the cleaning system 120. At block 210, the cleaning system 120 uses the electronic cleaning instructions generated at block 208 to execute initial or updated versions of the previously-described cleaning system protocol. Subsequently, the methodology 200 returns to block 202 to perform another iteration of the methodology 200.

FIG. 3 is a diagram illustrating a non-limiting example of how the cleaning target 150 (shown in FIG. 1) can be implemented as an EMU 150A that can be cleaned utilizing embodiments of the disclosure. The EMU 150A includes a helmet 310, an extravehicular visor assembly 314, a full-body suit 315, boots 317, a primary life support system (PLSS) 320, and a display and control module (DCM) 330, configured and arranged as shown. A display 312 is indicated within the helmet 310. Debris in the form of lunar regolith 160A is on the suit. For ease of illustration, only one region of the lunar regolith 160A is shown in FIG. 3. However, it is understood that the lunar regolith 160A is distributed at various locations and in various amounts throughout the exposed surfaces of the EMU 150A. In some embodiments of the disclosure, the lunar regolith 160A on the EMU 150A can include multiple different types of lunar regolith.

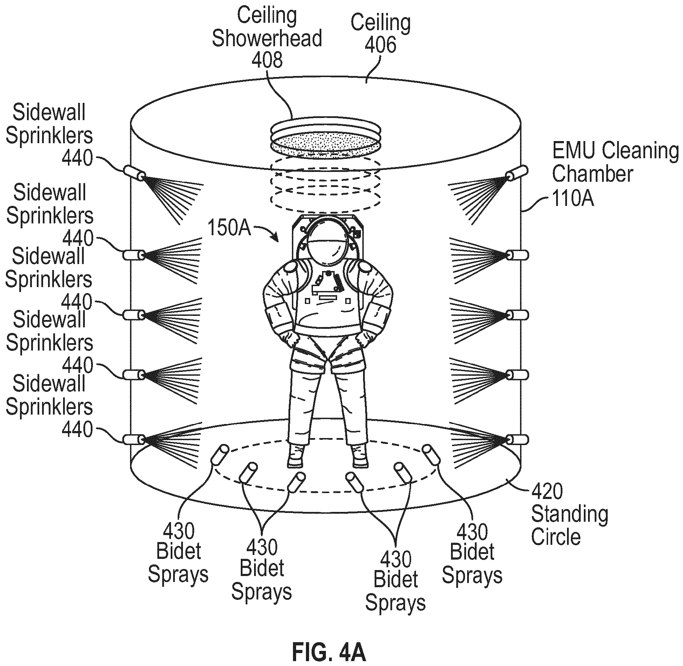

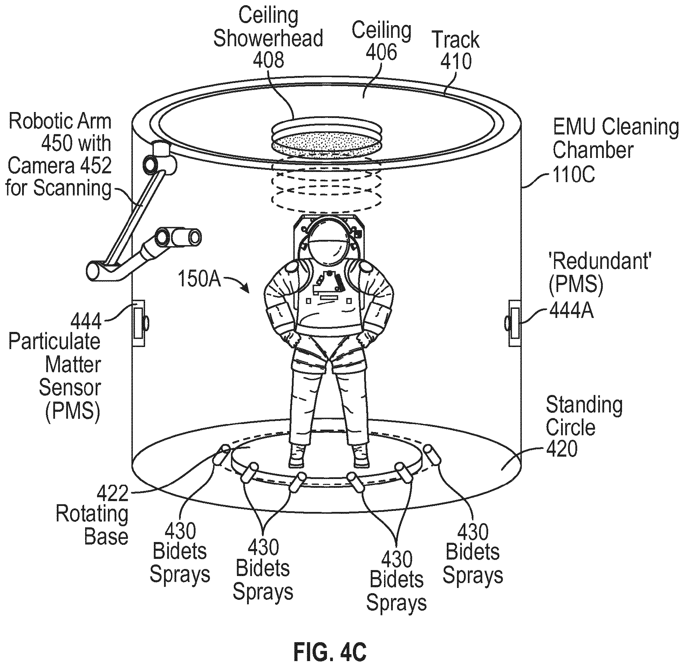

FIG. 4A is a diagram illustrating a non-limiting example of how the cleaning environment 110 (shown in FIG. 1) can be implemented as an EMU cleaning chamber 110A that can be controlled by the CMC system 170 (shown in FIG. 1) to automatically, efficiently, and effectively clean the EMU 150A in accordance with embodiments of the disclosure. In the EMU cleaning chamber 110A, no sensor network 130 is provided. The EMU cleaning chamber 110A includes a ceiling 406, a ceiling showerhead 408, a standing circle base 420, a network of bidet sprays 430, and a network of sidewall sprinklers 440, configured and arranged as shown. The sidewall sprinklers 440 and the bidet sprays 430 can be distributed uniformly or non-uniformly around the center of the standing circle 420 where the EMU 150A is positioned. In the setup of the EMU cleaning chamber 110A, a user (e.g., an astronaut) inside the EMU 150A enters the EMU cleaning chamber 110A and stands on the standing circle base 420 (e.g., in marked predetermined location). In this embodiment, because no sensor network 130 is used, the CMM 180 is not provided (or not used) and the CSC 190 is operable to choose the sequence of activations/deactivations applied to the ceiling showerhead 408, the bidet sprays 430, and the sidewall sprinklers 440. In embodiments of the disclosure, the CSC 190 can be implemented as an RL, non-limiting examples of which are the CSC 190A, 190B depicted in FIGS. 10 and 11 and described in greater detail subsequently herein.

Each spray unit of the ceiling showerhead 408, the bidet sprays 430, and the sidewall sprinklers 440 are operable to include solenoid valves that can be controlled by the CSC 190 to control the flow rates according to the cleaning system protocol. In some embodiments, the temperature(s) of the sprayed cleaning materials are controlled by the CSC 190. The distribution of the ceiling showerhead 408, the bidet sprays 430, and the sidewall sprinklers 440 is optimized to ensure that every location on the EMU 150A can be reached and sprayed. In some embodiments of the disclosure, the spray heads of the ceiling showerhead 408, the bidet sprays 430, and the sidewall sprinklers 440 are configured to include turbocharged pressure propellers (either fixed or having 360 degrees rotational ability). In embodiments of the disclosure where the EMU cleaning chamber 110A is operated in zero or low gravity environment, the ceiling showerhead 408, the bidet sprays 430, and the sidewall sprinklers 440 are each provide with sufficient pressure to overcome the lack of gravity (or lower gravity). The cleaning material (or cleaning solution) applied using the ceiling showerhead 408, the bidet sprays 430, and the sidewall sprinklers 440 can be in a liquid state prior to starting of the cleaning system protocol. The EMU cleaning chamber 110A can be air-locked, non-air-locked, vacuum sealed, or non-vacuum sealed.

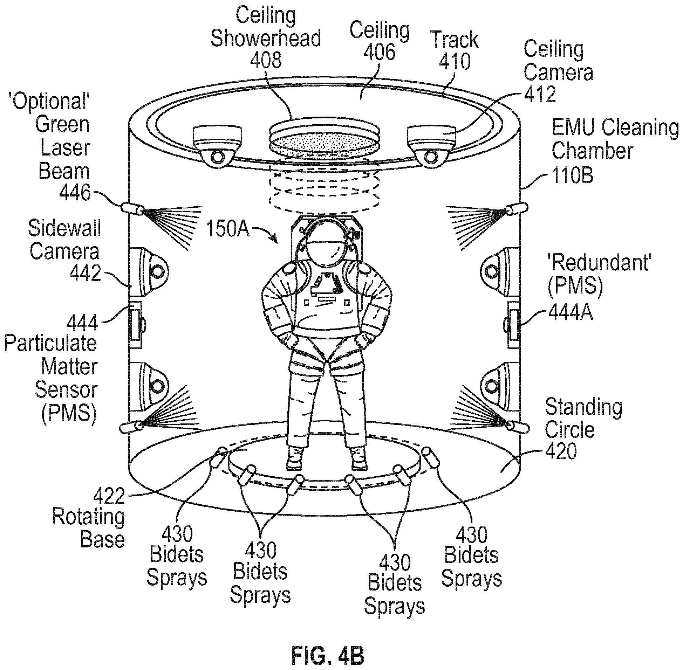

FIG. 4B is a diagram illustrating a non-limiting example of how the cleaning environment 110 (shown in FIG. 1) can be implemented as an EMU cleaning chamber 110B that can be controlled by the CMC system 170 (shown in FIG. 1) to automatically, efficiently, and effectively clean the EMU 150A in accordance with embodiments of the disclosure. The EMU cleaning chamber 110B is substantially the same as the EMU cleaning chamber 110A, except the ceiling 406 includes a track 410 that separates the ceiling 406 into a rotatable ceiling segment inside the track 410 and a stationary ceiling segment outside the track 410. The sensor network 130 (shown in FIG. 1) is implemented as ceiling cameras 412 (mounted to the rotatable ceiling segment), sidewall cameras 442, particulate matter sensors (PMS) 444, redundant PMS 444A, and optional green laser beam sources 446. Additionally, the standing circle 420 includes a rotating base 422. For ease of illustration, the sidewall sprinklers 440 of the EMU cleaning chamber 110B are not depicted but are included in the EMU cleaning chamber 110B.

The rotating base 422 and/or the ceiling cameras 412 (mounted to the rotatable ceiling segment) are controlled using the CMC system 170. The rotating base 422 is controlled using the CMC system 170 to rotate the astronaut and the EMU 150A with a rotation speed range that will be comfortable for the astronaut and not cause dizziness. With the rotating base 422, the sidewall sprinklers 440 do not need to be distributed from all sides. Instead, the sidewall sprinklers 440 can be attached longitudinally with even spacing between them. The rotating speed of the base is an additional control action that will be controlled by the CMC system 170 as part of the cleaning system protocol. In some embodiments of the disclosure, the CMC system 170 and the cleaning system protocol provide the rotation direction based on the angle of the spots needed to be cleaned with respect to the ceiling showerhead 408, the bidet sprays 430, and the sidewall sprinklers 440. In some embodiments of the disclosure, the rotating ceiling segment of the ceiling 406 can position the ceiling cameras 412 as part of the cleaning system protocol to capture images of the EMU 150A that provide image data for the CMC system 170 that provides a complete image of the EMU 150A.

The type and performance specifications (e.g., image sensors, resolution, front view, 360 degree view, zoom lens, image stabilization, RAW mode, internal memory, and the like) of the cameras 412, 442 can be predetermined at the design stage. The green laser beam sources 446 can, optionally, be used to improve features extraction of the image analysis components of the CMM 180 (shown in FIG. 1). With the rotating base 422, as well as the rotatable ceiling segment, the cameras 412, 442 do not need to be distributed from all sides and the top. Instead, the cameras 412, 442 can be attached longitudinally with even spacing between them. The PMS 444 can be used to ensure capturing air quality during the cleaning system protocol and providing the same to the CMM 180 to generate the ECM used in the CSC 190. The redundant PMS 444A can be provided for better measurement coverage. Throughout the cleaning system protocol, there could be foggy images captured by the cameras 412, 442 due to fluid splashing, dislodged debris, and the like. The CMM 180 can be provided with a preprocessing stage (e.g., module 510 shown in FIG. 5) configured and arranged to clear such noisy images and so the necessary image features can be effectively extracted.

4C is a diagram illustrating a non-limiting example of how the cleaning environment 110 (shown in FIG. 1) can be implemented as an EMU cleaning chamber 110C that can be controlled by the CMC system 170 (shown in FIG. 1) to automatically, efficiently, and effectively clean the EMU 150A in accordance with embodiments of the disclosure. The EMU cleaning chamber 110C is substantially the same as the EMU cleaning chambers 110A, 110B except, instead of mounting cameras 412, 442 on the ceiling and/or sidewalls of the chamber 110C, a robotic arm 450 with a camera 452 mounted at its end is mounted to the track 410 and used to scan the EMU 150A under control of the CSC 190 as part of the cleaning system protocol to ensure clarity of measurement and complete coverage of the whole EMU 150A. The track 410 is coupled to the rotatable ceiling segment of the ceiling 406 to enable the robotic arm 450 and attached camera 452 to rotate in addition to the range of movement and positions provided by the robotic arm 450. In some embodiments of the disclosure, the CSC 190 can be implemented using a RL system (e.g., RL system 190A, 190B shown in FIGS. 10 and 11), and a first RL system can be provided for the cleaning protocol, and a second RL system can be provided for the scanning operations performed by the robotic arm 450. Coordination between the first (or cleaning) RL agent and the second (or scanning) RL agent can be designed in a multi-agent framework to ensure the required safety and performance. The rotating base 422 can be coordinated with operations performed by the robotic arm 450 to enhance/simplify the reach of the robotic arm 450 and improve scanning operations. In some embodiments of the disclosure, more than one instance of the robotic arm 450 and the camera 452 can be provided.

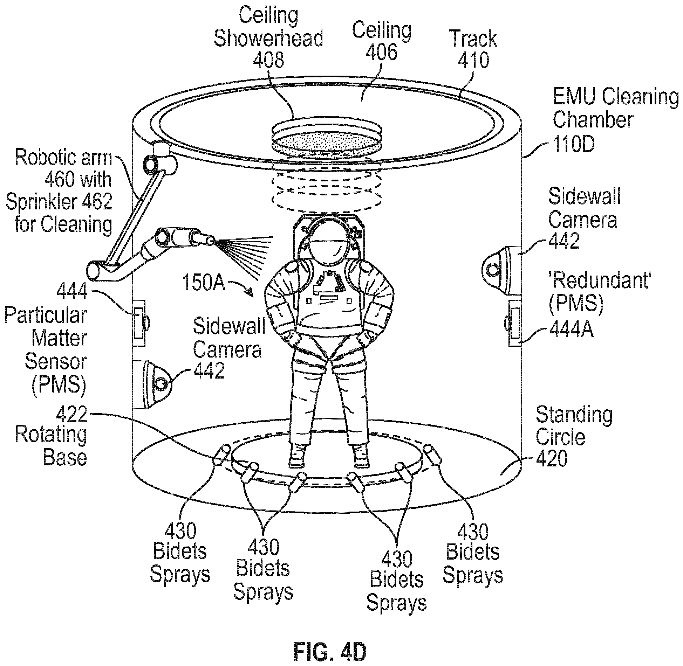

FIG. 4D is a diagram illustrating a non-limiting example of how the cleaning environment 110 (shown in FIG. 1) can be implemented as an EMU cleaning chamber 110D that can be controlled by the CMC system 170 (shown in FIG. 1) to automatically, efficiently, and effectively clean the EMU 150A in accordance with embodiments of the disclosure. The EMU cleaning chamber 110D is substantially the same as the EMU cleaning chambers 110A, 110B, 110C except, instead of providing the network of bidet sprays 430, and a network of sidewall sprinklers 440, a robotic arm 460 with a sprinkler 462 mounted at its end is mounted to the track 410 used to scan and clean the EMU 150A under control of the CSC 190 as part of the cleaning system protocol to ensure complete coverage of the whole EMU 150A. The track 410 is coupled to the rotatable ceiling segment of the ceiling 406 to enable the robotic arm 460 and attached sprinkler 462 to rotate in addition to the range of movement and positions provided by the robotic arm 460. The rotating base 422 can be coordinated with operations performed by the robotic arm 460 to enhance/simplify the reach of the robotic arm 460 and improve cleaning operations of the sprinkler 462. In some embodiments of the disclosure, more than one instance of the robotic arm 460 and the sprinkler 462 can be provided.

In some embodiments of the disclosure, additional components of the cleaning chambers 110A-110D can be configured and arranged such that the components can be moved as an alternative to (or in addition to) the movement of the rotating base 422. For example, a wall element on which the PMS 444, 444A and the sidewall cameras 442 can be operable to move (e.g., rotate) to position the PMS 444, 444A and the sidewall cameras 442 in a manner that supplements or replaces the need to move the user/astronaut (positioned inside the EMU 150A) and the EMU 150A by rotating the rotating base 422 to execute cleaning operations. Additionally, the rotatable ceiling segment of the ceiling 406 can be moved to achieve a desired position of the robotic arms 450, 460 as an alternative to (or in addition to) the movement of the robotic arms 450, 460 along the track 410.

In some embodiments of the disclosure, the CMC system 170 can be configured and arranged to define a safe region within the cleaning chambers 110A-110D. The safe region is a space around the position the EMU 150A will occupy during cleaning operations. As a non-limiting example, the safe region can be a cylindrical space above the rotating base 422. The CSC 190 controls the movement of the various movable components (e.g., the robotic arms 450, 460 and their attachments) such that they do not move into the safe region when executing cleaning operations. If the astronaut in the EMU 150A moves outside the safe region, or if the robotic arms 450, 460 and their attachments violate the boundary of the safe region, the CSC 190 terminates or pauses temporarily the cleaning operations until the astronaut and the EMU 150A are inside the safe region boundary.

Embodiments of the disclosure contemplate that, although the EMU cleaning chambers 110A, 110B, 110C, 110D are shown separately in FIGS. 4A-4D for ease of illustration and description, the features and functionality of the EMU cleaning chambers 110A, 110B, 110C, 110D can be provided in any combination. For example, it is contemplated that an instance of the EMU cleaning chambers 110A, 110B, 110C, 110D can be provided that includes one or more instances of the robotic arm 450 and camera 452, along with one or more instances of the robotic arm 460 and sprinkler 462.

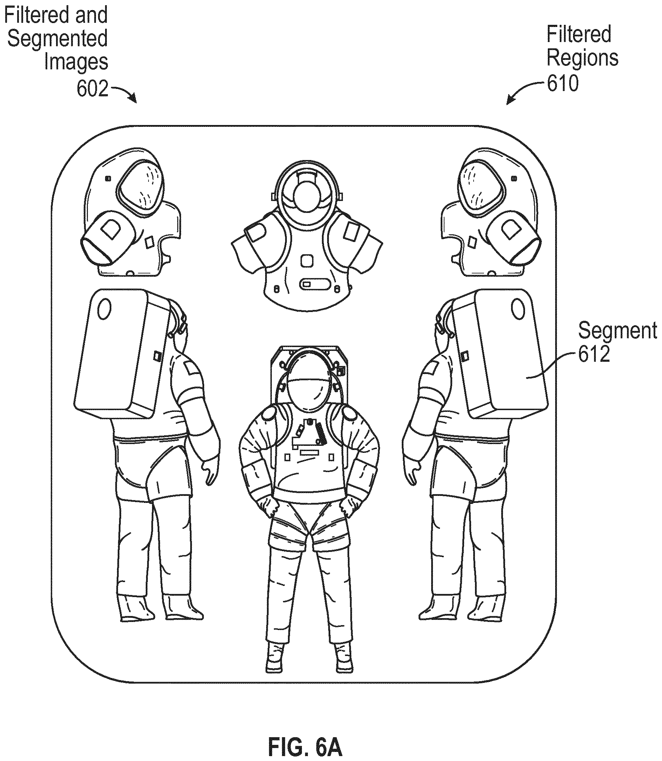

FIG. 5 is a simplified block diagram illustrating a non-limiting example of how the sensor network 130 (shown in FIG. 1) can be implemented as a sensor network 130A, and further illustrating how the CMM 180 (shown in FIG. 1) can be implemented as a CMM 180A. The sensor network 130A includes a camera system 504 and, optionally, debris sensors 506. The CMM 180A includes a pre-processing stage or segmentation & filtration module 510, along with a segmentation algorithm 520. As shown in FIG. 5, the sensor 130A take sensor readings from the cleaning target 150 and the debris 160 on the cleaning target 150 to generate raw image data 508 (e.g., RGB images organized as an array of images of the cleaning target 150 and the debris 160 from all sides). The pre-processing stage or segmentation & filtration module 510 processes the raw image data 508 to generate pre-processed images segmented into "N" cells and filtered. FIG. 6A depicts an example output from the pre-processing stage or segmentation & filtration module 510, where the cleaning target 150 is an EMU 150A. The output from the pre-processing stage or segmentation & filtration module 510 shown in FIG. 6A is a set of filtered and segmented images 602 of the EMU 150A, where the filtered and segmented images 602 include filtered regions 610, and each filtered region 610 includes segments 612.

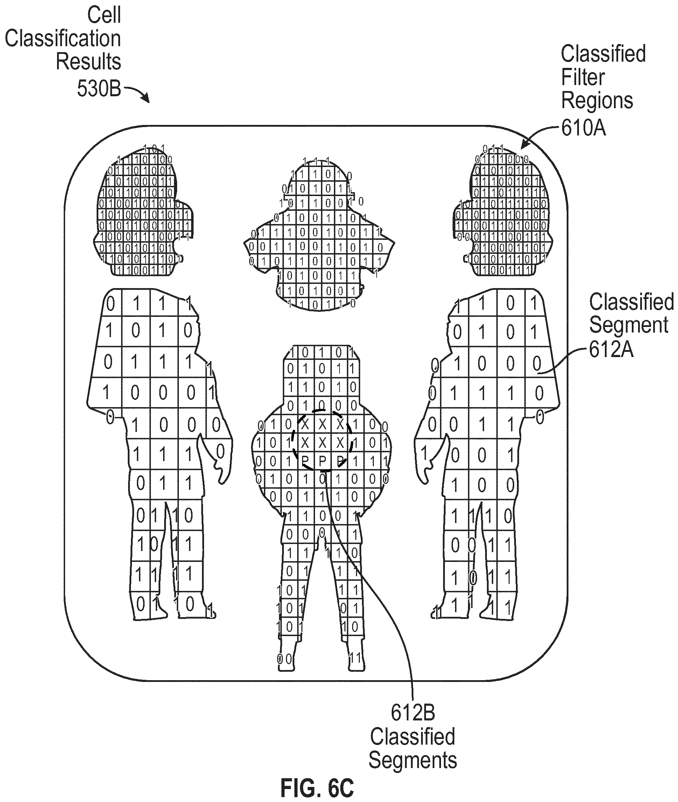

Returning to FIG. 5, the segment classification algorithm 520 applies classification operations to the N image segments to generate the cell classification results 530. The classification can be as simple as a binary classification (e.g., the cell classification results 530A having classified filter regions 610A and classified segments 612A shown in FIG. 6B), or the classification could have multiple levels depending on the variations in type and amount of the debris 160. In some embodiments of the disclosure, the classification algorithm 520 can be trained to identify image segments that should not be cleaned for a predetermined reason or reasons. For example, FIG. 6C depicts an example where the cell classification results 530 (shown in FIG. 5) are depicted as cell classification results 530B, which include classified segments 612B marked with an "X," which means that the segment has been classified as a segment that should not be cleaned for a predetermined reason or reasons. In the example shown in FIG. 6C, the segment classification algorithm 520 has determined that the image segments associated with the DCM 330 contain electronic components that could be damaged from direct application of cleaning solution thereto. Thus, the classified segments 612B associated with the DCM 330 (or with selected components of the DCM 320) are marked with an "X" to indicate to the CSC 190, 190A that X-marked classified segments 612B should not be cleaned. In some embodiments of the disclosure, the classified segments 612B can identify a maximum cleaning exposure for the classified segment 612B (e.g., marked with an "P" for partial cleaning), which means that the segment has been classified as a segment that can tolerate a maximum exposure to the cleaning solution for a predetermined reason or reasons (e.g., exposure of the segment to the cleaning solution beyond a maximum, time, pressure, etc. can damage the portion of the cleaning target 150, 150A represented by the classified segments 612B marked with a "P"). In embodiments of the disclosure, the P exposure may or may not be enough to satisfy the cleanliness threshold (Th) depicted at block 204 of the methodology 200 shown in FIG. 2. Dirt patterns reflected by the debris 160 are treated as an anomaly to the baseline (clean) image sample for each cell captured. In the segmentation process, cell size can be chosen to be small enough to cover all sides of the EMU 150A. The segment classification algorithm 520 can be designed as a deep learning algorithm, where multiple approaches can be tested to ensure sufficient detection accuracy. In some embodiment of the disclosure, a sensor fusion module can provided to fuse outputs from the camera system 504 and the debris sensors 506. However, such a fusion module can be added either as a pre-fusion module (fuses raw sensor data and then feed it to an RL agent 1010, 1110 of the CSC 190 RL agent) or as a post-fusion module (e.g., process each type of sensor data with a separate RL agent and then fuse the decisions).

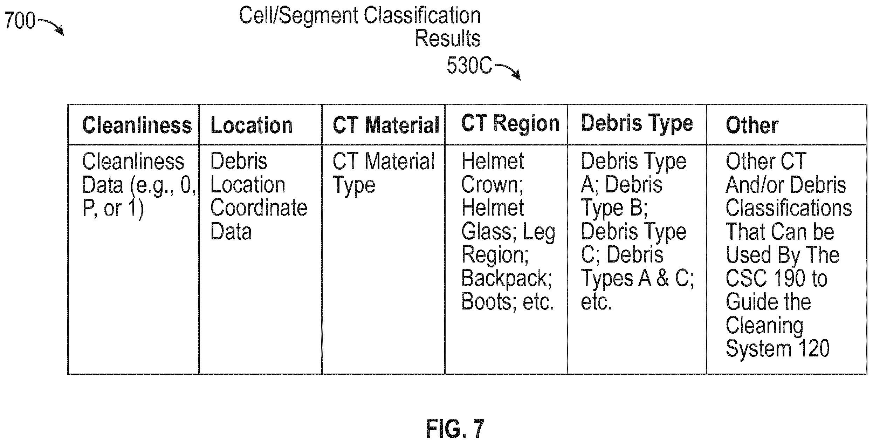

FIG. 7 depicts a table 700 illustrating how the segment classification algorithm(s) 520 can be configured and arranged to provide ECM or cell classification results 530C in addition to the binary zero (0), binary one (1), X, or P classifications shown in FIG. 6B. For example, the ECM or cell classification results 530B can include for each segment 612 debris location coordinate data; cleaning target material type; cleaning target regions; debris type; and any other suitable cleaning target and/or debris classifications that can be used by the CSC 190 to develop and enhance the cleansing system protocol applied by the CMC system 170 to the cleaning system 120.

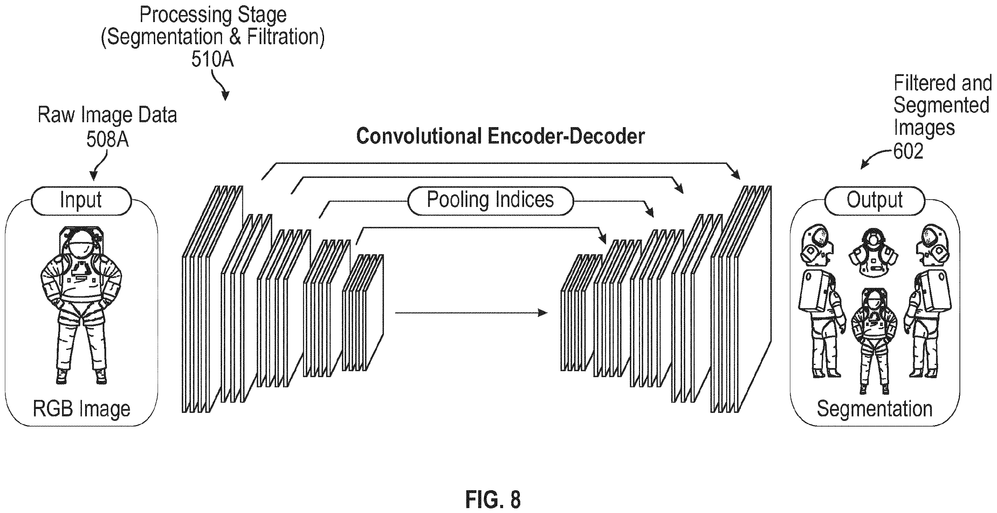

FIG. 8 depicts a non-limiting example of how the preprocessing stage (segmentation & filtration) module 510 can be implemented as a preprocessing stage (segmentation & filtration) module 510A formed from a Convolutional Encoder-Decoder having Pooling Indices. In the example depicted in FIG. 8, the cleaning target 150 is an EMU 150A; the raw image data 508 is implemented as raw image data 508A; and the output of the Convolutional Encoder-Decoder is the filtered segmented images 602 (also shown in FIG. 6A). The Convolutional Encoder-Decoder has an encoder network and a corresponding decoder network, followed by a final pixel-wise classification layer. The Convolutional Encoder-Decoder includes 13 encoder-side convolutional layers. Each encoder-side convolutional layer has a corresponding decoder-side layer and hence the decode-side includes 13 layers. The final decoder-side output is fed to a multi-class soft-max classifier to produce class probabilities for each pixel independently.

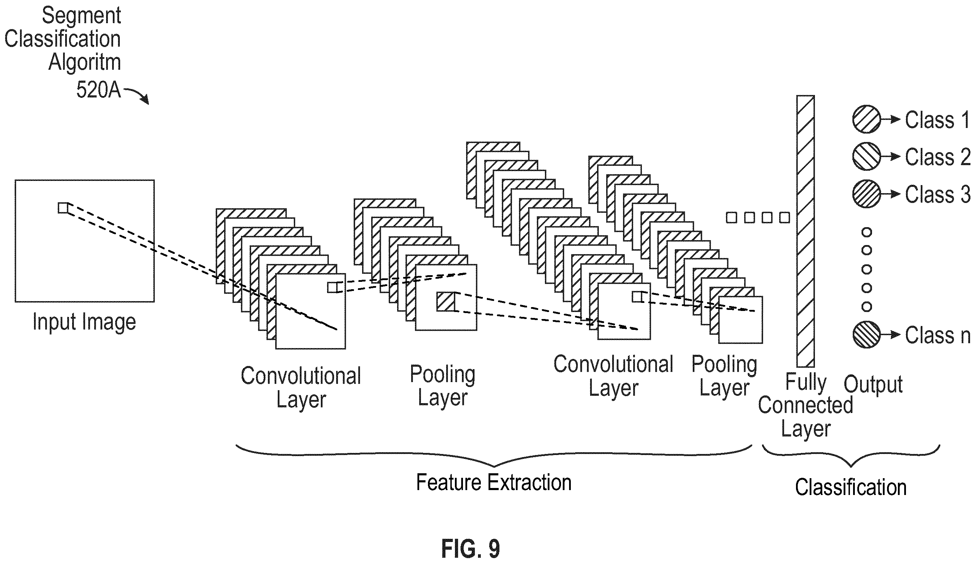

FIG. 9 depicts a non-limiting example of how the segment classification algorithm 520 can be implemented as a segment classification algorithm 520A formed as a CNN architecture for image classification. As shown the segment classification algorithm 520A receives an Input image (e.g., filtered and segmented images 602) and performs features extraction operations using a series of Convolutional layers and Pooling layers. Convolutional layers apply a set of filters to the Input image to extract important features, such as edges, lines, textures, and shapes. Each filter is a small matrix of weights that is convolved with the Input image to produce a feature map. Each feature map represents a particular feature or pattern that the CNN-type segment classification algorithm 520A has learned to detect in the Input image. The feature maps can be understood as the output of the convolution operation for each of the filters. By applying multiple filters, the Convolutional layer generates multiple feature maps, each of which represents a different set of learned features. The output of Convolution layer passes to activation layer (such as ReLU) to introduce non-linearity in training process. The output from activation layer is then passed to the Pooling layers.

The Pooling layers down-sample the feature maps produced by the Convolutional layer. This helps to reduce the dimensionality of the feature maps, making them more computationally efficient to process and reducing the risk of over-fitting. Max-pooling works by dividing the feature maps into non-overlapping regions and taking the maximum value of each region. This operation retains the most salient features of the feature maps and discards the rest, resulting in a compressed representation of the Input image. The pooling operation also helps to enforce some degree of translation invariance in the features, which means that the network will be able to recognize an object regardless of its location in the input image. While Convolution layers are meant for feature detection, max-pooling layers are meant for feature selection.

The output from the Convolutional layers and the Pooling layers is passed through one or more fully connected layers (also known as dense layers), which use a standard neural network architecture to classify the Input image segments The output of the convolutional and pooling layers in a CNN is a set of high-level features that represent the important characteristics of the input image. The role of the fully connected layers is to use these learned features to make a prediction about the class or label of the Input image.

FIG. 10 depicts a combined block/flow diagram of a CSC 190A, which is implemented as an RL system. The CSC/RL 190A is a non-limiting example of how the operations of the CSC 190 can be implemented. As previously noted, the CSC 190t uses the ECMs (e.g., as generated at block 202 of the methodology 200 shown in FIG. 2) to assist with selecting electronic cleaning instruction to implement the cleaning system protocols that control the cleaning system 120 to automatically, efficiently, and effectively clean the debris 160 from the cleaning target 150. In some embodiments of the disclosure, the cleaning target 150 is an EMU 150A, and the debris 160 is lunar regolith. The CSC/RL system 190A includes an agent 1010 configured and arranged to interact with an environment 1020. The agent 1010 includes a policy 1012 (i.e., a mapping from states to (preferably optimal) actions) and a reinforcement algorithm 1014.

The agent 1010 receives observations (or states) 1006 and reward signals 1004 as inputs signals. The observations 1006 indicate the current state of the environment 1020, while the reward input signal 1004 indicates a reward associated with a prior action of the agent 1010 (e.g., for an immediately preceding action 1002). Based on the observations/states 1006 and the reward signals 1004, the agent 1010 chooses an action 1002 (location of the displayed region 126), which is applied to the environment 1020. Responsive to the action 1002, a new observation/state 1006 and reward 1004 for the environment 1020 are determined. The RL algorithm 1014 of the agent 1010 seeks to learn values of observations/states 1006 (or state histories) and tries to maximize utility of the outcomes. The values of observations/states 1006 can be defined by a reward function, and non-limiting example of which is the reward function Equation (1) shown in FIG. 10. Thus, the RL algorithm 1014 constructs a model of the environment 1020, wherein the model attempts to learn what operations are possible in each observation/state 1006, and what observation/state 1006 will result from performing an operation in a given state. The cycle repeats as the inputs 1006, 1004 are continuously provided to the agent 1010.

The observations/states 1006 can be defined as a signal conveying to the agent 1010 some sense of "how the environment is" at a particular time. The observations/states 1006 can be whatever information is available to the agent 1010 about the environment 1020. The observation/state signal 1006 can be produced by any suitable preprocessing system (including sensors and sensor analysis circuitry such as the sensor network 130 and/or the outputs from the CMM 180) capable of evaluating the state of the environment 1020.

The policy 1012 defines how the learning agent 1010 behaves at a given time. Roughly speaking, the policy 1012 is a mapping from perceived observations/states 1006 of the environment 1020 to the actions 1002 to be taken when in those states. In some cases the policy 1012 can be a simple function or lookup table, whereas in other cases it can involve extensive computation such as a search process. The policy 1012 is the core of a RL agent 1010 in the sense that it alone is sufficient to determine behavior. In general, the policy 1012 can be stochastic.

The reward signal 1004 defines the goal in the RL problem (i.e., continuously generating and updating cleaning system instructions that implement a cleaning system protocol). On each time step, the environment 1020 sends to the RL agent 1010 the reward signal 1004. The objective of the agent 1010 is to maximize the total reward 1004 it receives over the long run. The reward signal 1004 thus defines what are good and bad events for the agent 1010. The reward signal 1004 is the primary basis for altering the policy 1012. If an action 1002 selected by the policy 1012 is followed by low reward 1004, the policy 1012 may be changed to select some other action 1002 in that situation in the future. In general, the reward signal 1004 can be stochastic functions of the state of the environment 1020 and the actions 1002 that were taken.

Whereas the reward signal 1004 indicates what is good in an immediate sense, the reward function (shown in FIG. 10 as the reward function Equation (1)) specifies what is good (or valuable) in the long run. The reward function Equation (1) provides an estimate the value of associated with the inputs 1006, 1004 and is executed by the RL algorithm 1014 of the agent 1010. In the non-limiting example reward function shown in Equation (1), the last summation operation is a penalty term that penalizes sprinkling the cleaning materials on specific cells/segments that might have critical electronics that could be damaged by the cleaning material (e.g., the "X" classifications shown in FIG. 6C). In the penalty term in Equation (1), ***Iₐᵢ*** is an indicator function that is triggered in specific sets or based on events to panelize (or engage asynchronously based on an event or condition occurring) the RL agent 1010, and n is the number of indicator functions. The reward function can also include terminal terms or conditional terms. Roughly speaking, the value of an observation/state 1006 is the total amount of reward 1004 the agent 1010 can expect to accumulate over the future, starting from that observation/state 1006. Accordingly, the reward signal 1004 determines the immediate, intrinsic desirability of environmental observations/states 1006, values (defined by the reward function) indicate the long-term desirability of observations/states 1006 after taking into account the observations/states that are likely to follow, and the rewards 1004 available in those observations/states 1006. For example, an observation/state 1006 might always yield a low immediate reward 1004 but still have a high value because it is regularly followed by other observations/states 1006 that yield high rewards 1004. The actions 1002 are chosen based on value judgments. The agent 1010 seeks actions 1002 that bring about observations/states 1006 of highest value (as measured by the reward function) not the highest reward signal 1004 because such actions 1002 obtain the greatest amount of reward signals 1004 over the long run. The reward signals 1004 are essentially given directly by the environment 1020, but values (as defined by the reward function) must be estimated and re-estimated from the sequences of observations/states 1006 the agent 1010 makes over its entire lifetime.

RL performed by the CSC/RL system 190A is different from supervised machine learning. Supervised machine learning is learning from a training set of labeled examples provided by a knowledgeable external supervisor. Each example is a description of a situation together with a specification of the correct action the system should take to that situation, which is often to identify a category to which the situation belongs. The object of this kind of machine learning is for the system to extrapolate, or generalize, its responses so that it acts correctly in situations not present in the training set. Supervised machine learning alone is not adequate for learning from interaction. In interactive problems it is often impractical to obtain examples of desired behavior that are both correct and representative of all the situations in which the agent has to act. In uncharted territory, which is where learning is expected to be most beneficial, an agent must be able to learn from its own experience.

Reinforcement learning is also different from unsupervised machine learning, which is typically attempting to find structure hidden in collections of unlabeled data. The terms supervised machine learning and unsupervised machine learning would seem to exhaustively classify machine learning paradigms, but they do not. Although both RL and unsupervised learning do not rely on examples of correct behavior, they differ in that RL is attempting to maximize a reward signal instead of attempting to find hidden structure. Uncovering structure in an agent's experience can be useful in RL but by itself does not address the RL problem of maximizing a reward signal. Accordingly, it is appropriate to consider RL to be a third machine learning paradigm, alongside supervised learning and unsupervised learning.

FIG. 11 depicts a more specific example of how the CSC 190 can be implemented as a CSC 190B operable to apply RL to the EMU cleaning chambers 110A-110D. The CSC 190B includes an RL agent 1110 communicatively coupled to an environment 1120, which can be implemented as the EMU cleaning chambers 110A-110D. The RL agent 1110 can be designed to learn how to control the environment 1120 using either online (on-policy or off-policy) or offline to learn the control policy. A simulation platform is provided that mimics the behavior of the cleaning system 120 of the EMU cleaning chambers 110A-110D. The RL agent 1110 can use the simulation platform to learn a cleaning protocol that will be applied to the cleaning system 120. The RL agent 1110 is operable to generate either continuous or discrete control actions [e.g., controlling the flow rate levels). The value or control (behavior) functionalities can be approximated using deep neural networks. Generally, it is assumed that the RL agent 1110 should achieve both planning and lower-level sprays control. However, in some embodiments of the disclosure, the two functions can be separated.

In some embodiments of the disclosure, an end-to-end RL framework can be generated, which takes the raw sensor data output (e.g., raw image data 508) and generates control sequences of the cleaning system protocol. This approach trades off some level of system performance (e.g., accuracy) in exchange for reduced computations load through eliminating the preprocessing operations (e.g., module 510). The state can include the cleanliness state of each spot or cell in the EMU 150A; and/or the previous action states. The reward function can take different shapes/approaches such as minimizing expected energy/materials; cleaning time; and/or increasing crew comfort using known comfort level indices. The reward function can have either rewarding and /or penalty terms. In the non-limiting example reward function shown in Equation (1) of FIG. 10, the last summation operation is a penalty term that penalizes sprinkling the cleaning materials on specific cells/segments that might have critical electronics that could be damaged by the cleaning material (e.g., the "X" classifications shown in FIG. 6C. The reward function can also include terminal terms or conditional terms.

FIG. 12 illustrates an example of a computer system 1200 that can be used to implement the computer-based components in accordance with aspects of the disclosure. The computer system 1200 includes an exemplary computing device ("computer") 1202 configured for performing various aspects of the content-based semantic monitoring operations described herein in accordance aspects of the disclosure. In addition to computer 1202, exemplary computer system 1200 includes network 1214, which connects computer 1202 to additional systems (not depicted) and can include one or more wide area networks (WANs) and/or local area networks (LANs) such as the Internet, intranet(s), and/or wireless communication network(s). Computer 1202 and additional system are in communication via network 1214, e.g., to communicate data between them.

Exemplary computer 1202 includes processor cores 1204, main memory ("memory") 1210, and input/output component(s) 1212, which are in communication via bus 1203. Processor cores 1204 includes cache memory ("cache") 1206 and controls 1208, which include branch prediction structures and associated search, hit, detect and update logic, which will be described in more detail below. Cache 1206 can include multiple cache levels (not depicted) that are on or off-chip from processor 1204. Memory 1210 can include various data stored therein, e.g., instructions, software, routines, etc., which, e.g., can be transferred to/from cache 1206 by controls 1208 for execution by processor 1204. Input/output component(s) 1212 can include one or more components that facilitate local and/or remote input/output operations to/from computer 1202, such as a display, keyboard, modem, network adapter, etc. (not depicted).

A cloud computing system 50 is in wired or wireless electronic communication with the computer system 1200. The cloud computing system 50 can supplement, support or replace some or all of the functionality (in any combination) of the computer system 1200. Additionally, some or all of the functionality of the computer system 1200 can be implemented as a node of the cloud computing system 50.

Many of the functional units of the systems described in this specification have been labeled as modules. Embodiments of the disclosure apply to a wide variety of module implementations. For example, a module can be implemented as a hardware circuit including custom VLSI circuits or gate arrays, off-the-shelf semiconductors such as logic chips, transistors, or other discrete components. A module can also be implemented in programmable hardware devices such as field programmable gate arrays, programmable array logic, programmable logic devices or the like. Modules can also be implemented in software for execution by various types of processors. An identified module of executable code can, for instance, include one or more physical or logical blocks of computer instructions which can, for instance, be organized as an object, procedure, or function. Nevertheless, the executables of an identified module need not be physically located together, but can include disparate instructions stored in different locations which, when joined logically together, function as the module and achieve the stated purpose for the module.

The various components/modules/models of the systems illustrated herein are depicted separately for ease of illustration and explanation. In embodiments of the disclosure, the functions performed by the various components/modules/models can be distributed differently than shown without departing from the scope of the invention defined by the claims.

Aspects of the invention can be embodied as a system, a method, and/or a computer program product at any possible technical detail level of integration. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims.

## Claims

1. A controller operable to perform cleaning system control operations comprising:
generating, using a processor system, a first electronic cleanliness measurement, ECM, associated with a cleaning target (150); and
based at least in part on a determination that the first ECM exceeds a threshold, generating, using the processor system, a first cleaning system protocol;
wherein the processor system executes the first cleaning system protocol to control a cleaning system operable to clean debris from the cleaning target.

2. The controller of claim 1, wherein the control operations further comprise, subsequent to using the first cleaning system protocol to control a cleaning system (120) operable to clean debris from the cleaning target, generating a second ECM associated with the cleaning target.

3. The controller of claim 2, wherein the control operations further comprise, based at least in part on a determination that the second ECM exceeds a threshold, generating an updated version of the first cleaning system protocol.

4. The controller of claim 3, wherein the control operations further comprise using the updated version of the first cleaning system protocol to control the cleaning system operable to clean debris from the cleaning target.

5. The controller of claim 4, wherein the control operations further comprise, based at least in part on a determination that the first ECM does not exceed the threshold, not initiating operation of the cleaning system.

6. The controller of claim 4, wherein the control operations further comprise, based at least in part on a determination that the second ECM does not exceed the threshold, terminating operation of the cleaning system.

7. The controller of claim 4, wherein the processor system:
uses a first configuration a machine learning algorithms to generate the first ECM and the second ECM; and
uses a second configuration of machine learning algorithms to generate the first cleaning system protocol and the updated version of the first cleaning system protocol;
wherein the second configuration of machine learning algorithms comprises a reinforcement learning machine learning algorithm.

8. A controller operable to perform control operations comprising:
accessing, using a processor system, raw data (508) associated with a cleaning target (150);
applying, using the processor system, a segmentation operation to the raw data to generate segmented data;
applying, using the processor, a classification operation to the segmented data to generate classified segmented data; and
providing the classified segmented data to a cleaning system controller operable to use the classified segmented data generate a cleaning system protocol operable to control a cleaning system to clean debris from the cleaning target.

9. The controller of claim 8, wherein the raw data comprises raw image data.

10. The controller of claim 9, wherein the raw image data represents the cleaning target and debris to be cleaned from the cleaning target.

11. The controller of claim 10, wherein the control operations further comprise applying, using the processor system, the segmentation operation and a filtering operation to the raw date to generate the segmented data as filtered segmented data.

12. The controller of claim 11, wherein the control operations further comprise applying, using the processor system, the classification operation to the filtered segmented data to generate the classified segmented data as classified filtered segmented data.

13. The controller of claim 12 wherein the processor system uses:
a first convolutional neural network, CNN, to perform the segmentation operation; and
a second CNN to perform the filtering operation.

14. A controller according to any preceding claim, wherein the cleaning target is an extravehicular mobility unit, EMU, (150A) having debris; and
wherein the processor system executes the first cleaning system protocol to control the cleaning system operable to clean some or all of the debris from the EMU.

15. The controller of claim 14, wherein the control operations further comprise terminating the first cleaning system protocol based at least in part on a determination that the cleaning system attempted to clean a prohibited region of the EMU, or wherein the control operations further comprise terminating the first cleaning system protocol based at least in part on a determination that the EMU is outside a safe region.
